# DEMANDE DE BREVET EUROPEEN

(11) **EP 0 594 496 A1**
(43) Date de publication de la demande: **27.04.1994**
(21) Numéro de dépôt: 93402565.1
(22) Date de dépôt: 19.10.1993
(51) Int. Cl.: H04N 5/33, F41G 3/16, G01C 17/20

(54) **Caméra thermique à détermination de l'orientation de la ligne de visée**

(30) Priorité: 20.10.1992 FR 9212527
(71) Demandeur: SAT (Société Anonyme de Télécommunications), F-75116 Paris (FR)
(72) Inventeur: Melchior, Frédéric Bernard, F-75625 Paris Cedex 13 (FR); Biolley, Alain Pierre, F-75625 Paris Cedex 13 (FR)
(74) Mandataire: Bloch, Gérard

(57) **Abrégé**

La caméra (2, 3) fournit un signal d'image (13) et comporte des moyens de traitement (14) du signal fournissant un signal exploitable (15C). Des moyens (6,7 ;67) de détermination de l'orientation de la ligne de visée (18) permettent d'associer l'orientation de la ligne de visée (18) au signal exploitable (15C) des moyens de traitement (14) agencés pour créer une fenêtre (16) contenant l'un des deux angles de site et d'azimut et mobile en fonction de l'autre des deux angles.
- Application au repérage d'objets distants.

## Description

La présente invention concerne une caméra thermique, à ligne de visée orientable contrôlée de manière aléatoire, fournissant un signal d'image et comportant des moyens de traitement du signal d'une image de la caméra fournissant un signal exploitable à des moyens d'exploitation, des moyens de détermination en angle de site et en angle d'azimut de l'orientation de la ligne de visée fournissant un signal d'orientation aux moyens de traitement afin d'associer l'orientation de la ligne de visée au signal exploitable.

Lorsqu'un observateur regarde une scène avec une caméra, il est fréquent qu'il éprouve le besoin de connaître l'orientation de la ligne de visée de la caméra par rapport à des repères localement fixes.

Un tel besoin est particulièrement important pour les applications militaires pour lesquelles l'observateur doit nécessairement relier l'orientation de l'observation avec des informations issues ou destinées à des intervenants externes :
- soit que l'observateur reçoive de l'extérieur une consigne d'observation dans une direction déterminée (procédure de désignation de la "menace" dans le sens intervenant externe vers caméra),
- soit que l'observateur, ayant par lui-même décelé une menace grâce à ses observations dans la caméra, doive retransmettre à l'intervenant externe la position de ladite menace (procédure de désignation de la menace dans le sens caméra vers intervenant externe).

Dans ces deux cas de figure, le référentiel le plus couramment utilisé est constitué par la direction du nord et par la verticale terrestre.

La position de la direction visée sera, dans ce référentiel, définie par les deux angles suivants :
- l'azimut, angle orienté entre la direction du nord et la direction visée, cette dernière projetée sur le plan horizontal local,
- le site, angle orienté entre le plan horizontal local et la direction visée, cet angle étant mesuré dans le plan azimutal.

Le plan horizontal local est le plan perpendiculaire à la verticale terrestre locale.

Le plan azimutal est le plan vertical qui contient l'observateur et la direction visée.

Le nord considéré peut être soit le nord géographique vrai (direction du pôle nord), soit le nord magnétique local (direction donnée localement par une aiguille aimantée).

Une caméra de l'art antérieur fournit des images, observées au travers d'un oeilleton de la caméra ou sur un écran de télévision. Dans un cas comme dans l'autre, l'opérateur doit détourner son regard pour tenter de repérer la direction visée.

S'il s'agit d'une observation nocturne au moyen d'une caméra infrarouge, qui est un instrument de vision nocturne fonctionnant même en l'absence totale de lumière visible résiduelle, l'observateur ne peut effectuer une visée de la scène observée à l'aide d'un instrument d'optique conventionnel tel qu'un compas de relèvement, puisque l'observation peut se dérouler par une nuit noire, où la scène et le paysage sont invisibles dans ledit instrument d'optique conventionnel. Il doit alors utiliser des dispositifs de relèvement, tels que compas magnétiques ou pendules clinomètres, permettant de mesurer l'azimut et le site d'un objet observé ou de points remarquables de la scène, ou permettant de pointer aisément la caméra vers une direction désignée par un intervenant externe.

Cependant, l'observateur ne peut, sans perte d'attention, acquérir simultanément l'image thermique de la scène délivrée par la caméra IR, image qui inclut, même par nuit totale, la visualisation claire des menaces potentielles, ou, plus généralement, la visualisation de tous points remarquables du paysage susceptibles de l'intéresser, et les informations fournies par les dispositifs de relèvement.

Le document FR-A- 2 480 424 enseigne une caméra d'un type voisin de celui défini ci-dessus, mais sans association de la ligne de visée et du signal exploitable. Par l'enseignement du document US-A-4 763 419, le signal d'orientation, en site et en azimut, peut être fourni aux moyens de traitement, afin d'associer l'orientation de la ligne de visée au signal exploitable. Cependant, la présentation des angles de site et d'azimut est effectuée par deux rangées de graduations recouvrant partiellement l'image et dont les lectures ne peuvent être instantanées car elles s'effectuent en deux endroits distants.

La présente invention vise à permettre une lecture rapide des deux valeurs d'angle afin de limiter la perte d'attention de l'observateur dans l'acquisition de l'image de la scène.

A cet effet, elle concerne une caméra du type indiqué ci-dessus, caractérisée par le fait que les moyens de traitement sont agencés pour créer une fenêtre contenant l'un des deux angles de site et d'azimut et mobile en fonction de l'autre des deux angles le long d'un repère.

Un observateur voit ainsi, sous forme compacte, les informations donnant les deux angles de repère, sans que l'image de la scène soit altérée.

Avantageusement, les moyens de détermination de l'orientation de la ligne de visée comportent un moyen détecteur agencé pour fournir une indication concernant la position angulaire relative entre un support suivant les déplacements angulaires de la ligne de visée et un repère sur un corps mobile porté, libre en rotation, par ledit support et agencé pour être orienté selon une direction de référence. Cela permet, de façon particulièrement simple, d'obtenir le signal d'orientation.

Les moyens de traitement peuvent être des moyens optiques, qui réalisent alors très simplement, par exemple par addition de faisceaux lumineux, l'association entre le signal d'image et le signal d'orientation.

En particulier, le moyen détecteur comporte avantageusement une optique collimatrice agencée pour recevoir l'image dudit corps mobile au travers d'un faisceau de fibres optiques dont les extrémités sont respectivement disposées dans la surface focale de ladite optique et, de façon régulière, selon la surface d'une sphère entourant ledit corps. La disposition ci-dessus permet de corriger les défauts de profondeur de champ ainsi que les défauts de linéarité de l'image du corps mobile observé.

L'invention sera mieux comprise à l'aide de la description suivante de deux formes de réalisation préférées du dispositif de prise de vues de l'invention, en référence au dessin annexé, sur lequel :
- la figure 1 est un schéma par blocs illustrant la structure fonctionnelle du dispositif de prise de vues,
- la figure 2 montre la première forme de réalisation du dispositif de prise de vues, à restitution purement optique,
- la figure 3 représente, sous forme simplifiée, le dispositif de la figure 2, dans lequel l'échelle de site est décalée,
- la figure 4 est une vue de l'image restituée illustrant l'effet du dévers du dispositif,
- les figures 5-6 montrent un ensemble à fibres optiques pour transmettre une image compensée en distorsion d'un capteur d'angle de la figure 2,
- la figure 7 correspond à la figure 5, les fibres optiques étant remplacées par un objectif,
- la figure 8 montre la seconde forme de réalisation du dispositif de l'invention, l'image restituée étant obtenue à partir d'un signal électronique, et
- la figure 9 est une vue de l'image restituée élec- troniquement, illustrant l'effet du dévers du dispositif.

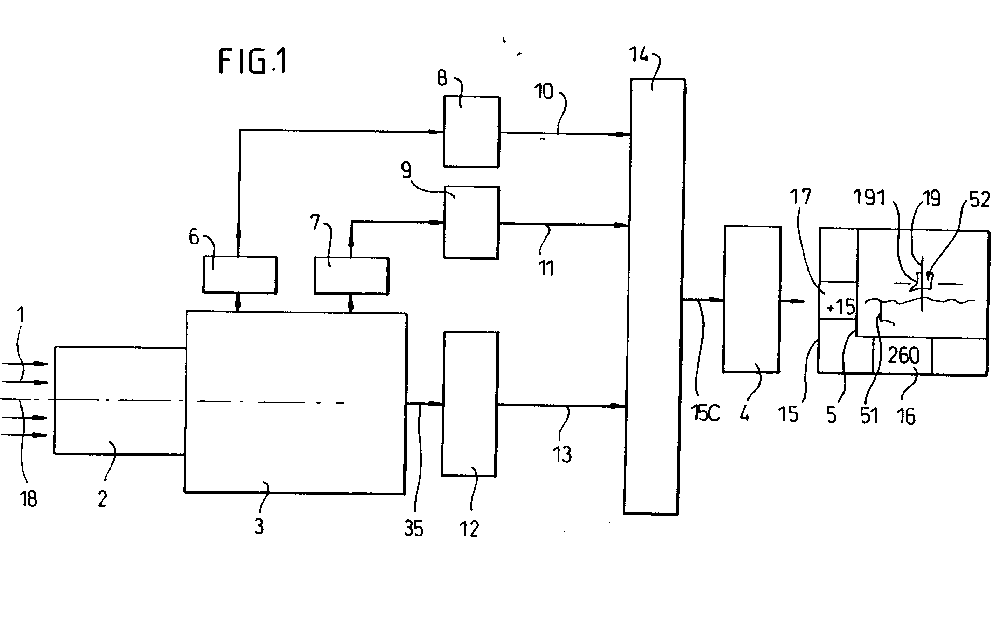

Le schéma par blocs de la figure 1 représente une caméra 2,3 de type connu, ici infrarouge, commandant un dispositif de visualisation 4, lui aussi de type connu.

L'orientation de la ligne de visée 18 de la caméra 2,3 est contrôlée de manière aléatoire, ici par un observateur.

La caméra 2,3 reçoit, selon sa ligne de visée 18, un faisceau d'un rayonnement infrarouge 1 provenant d'une scène observée et traversant son objectif 2 pour atteindre un transducteur 3.

Le transducteur 3 fournit en réponse un signal instantané d'image 35, sous forme optique ou électronique, qui est appliqué à un dispositif de mise en forme 12 le transformant en un signal d'image 13 utilisable par le dispositif de visualisation 4.

Un dispositif de traitement 14, placé en aval du dispositif de mise en forme 12, en reçoit le signal d'image 13 et transmet au dispositif de visualisation 4 un signal d'image composite 15C comportant, outre le signal d'image 13, des signaux d'orientation de la ligne de visée 18 constitués d'un signal d'azimut 10 et d'un signal de site 11. Les signaux d'azimut 10 et de site 11 proviennent respectivement de deux dispositifs de mise en forme 8,9 respectivement disposés en aval de deux capteurs 6,7 d'angle, l'un d'azimut, l'autre de site, de la ligne de visée 18.

Pour la simplicité de l'exposé, le signal d'image 13 est représenté restitué sous forme optique (15), bien qu'une restitution sous forme électronique, destinée à un système d'analyse d'image, soit tout aussi envisageable, c'est-à-dire qu'il s'agit en fait d'une pseudo-image. L'image composite restituée 15 comporte une image restituée 5 de la scène avec, ici, le paysage 51 et un objet observé 52 situé au point de référence 191 de l'image 19 d'une mire correspondant à la position de la ligne de visée 18 dans l'image 5.

Sur deux côtés adjacents de l'image 5, apparaissent deux images 16 et 17 traduisant les indications fournies par les signaux d'azimut 10 et de site 11.

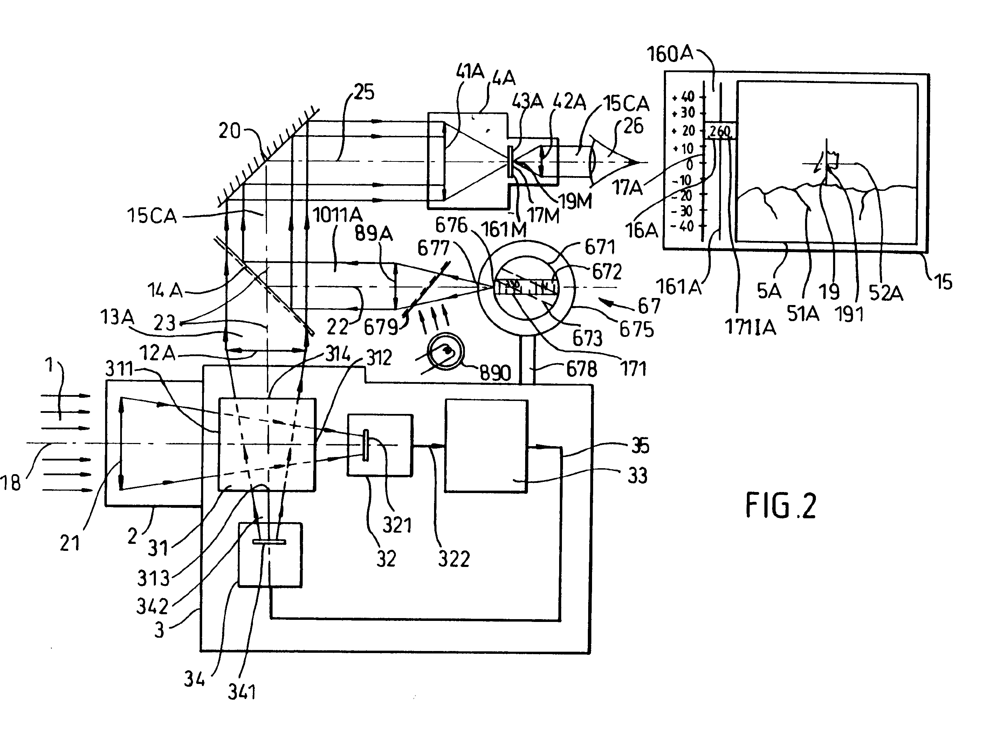

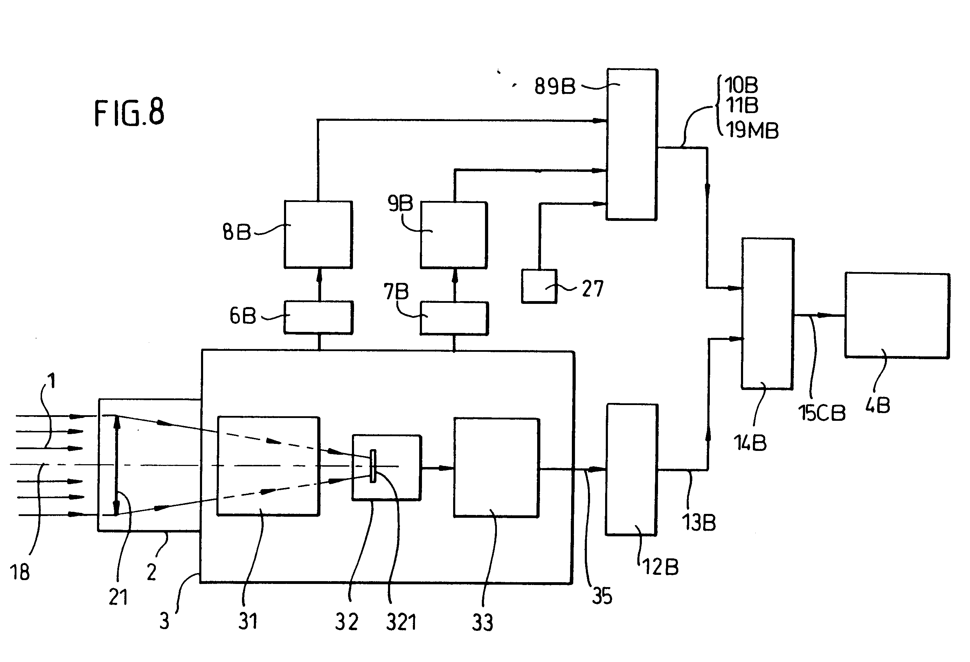

Pour la clarté de la représentation, les éléments fonctionnels identiques sur les figures suivantes portent, sauf indication contraire, la même référence et ne seront donc pas à nouveau décrits. Les éléments fonctionnels de même fonction mais de constitution différente comportent une référence avec un suffixe A ou B selon qu'ils se rapportent à l'exemple de restitution purement optique (figure 2) ou de restitution électronique (figure 8).

Le dispositif de prise de vues de la figure 2, de structure fonctionnelle semblable à celle de la figure 1, effectue une restitution (15A) purement optique, dans un oeilleton 4A, du signal d'image composite 15CAengendré à partir du signal d'image 13Asortant de la caméra 2,3 et d'un signal 1011A, équivalent de la somme des signaux d'angle 10 et 11, provenant d'un capteur 67 réunissant les fonctions des capteurs 6 et 7.

L'ensemble des éléments représentés est, sauf indication contraire, solidaire de la caméra 2,3 et même, dans cet exemple, intégré à la caméra 2,3.

L'objectif 2 transmet, au travers d'une lentille convergente 21, le faisceau 1, alors convergent, à l'entrée 311 d'un dispositif de balayage opto- mécanique 31 de la caméra 2,3 comportant ici, de façon connue, un prisme tournant et des miroirs oscillants, non représentés. Le faisceau 1 sort en 312 du dispositif de balayage 31 et converge sur une barrette 321 d'éléments photo-sensibles d'un détecteur 32. Le détecteur 32 convertit le rayonnement IR reçu en un signal électronique 322 qui est amplifié et mis en forme par un bloc électronique 33 dont le signal de sortie 35 attaque une barrette 341 de diodes électroluminescentes d'un module 34 émetteur de lumière visible.

Les diodes 341 restituent dans le spectre visible l'image IR reçue par les éléments photo-sensibles 321. Dans cet exemple, les barrettes 321 et 341 couvrent la même fenêtre de balayage de la scène, si bien que le faisceau visible 342 issu de la barrette 341 traverse, tout comme le faisceau incident 1, le dispositif de balayage 31 pour y subir une déflexion en synchronisme avec celle du faisceau incident 1.

Le faisceau visible 342, entrant en 313 dans le dispositif de balayage 31, en sort en 314 et reconstitue l'image de la scène dans toute son étendue, après un cycle complet de balayage. Le faisceau visible 342 traverse ensuite, selon son axe optique 23, le dispositif de mise en forme 12A, ici une lentille convergente, d'où il ressort selon un faisceau parallèle correspondant au signal d'image 13A.

Le signal d'image 13Aatteint, sous une incidence de 45 degrés, et traverse sans déviation, le dispositif de traitement 14A, ici une lame semi-transparente. La lame 14A reçoit aussi à 45 degrés, mais sur sa face d'émergence du signal d'image 13A, le faisceau optique 1011 A, correspondant aux signaux d'azimut 10 et de site 11 fournissant l'image du capteur 67 d'azimut et de site, décrit plus loin.

Le faisceau 1011A est réfléchi sur la lame 14A dans la direction 23 du faisceau émergent du signal d'image 13A, auquel il s'additionne, en fonction des coefficients de transmission et de réflexion de la lame 14A, ce qui crée le signal d'image composite 15CA. Le signal d'image composite 15CA est réfléchi par un miroir de repli 20 selon l'axe optique 25 de l'oeilleton 4A, où il traverse une lentille convergente d'entrée 41Aet une lentille convergente de sortie 42Aqui restitue l'image 15Aà à l'oeil 26 de l'observateur exploitant cette image. Une lame transparente 43A, située au foyer commun entre les ientiiies41Aet42A, comporte une échelle verticale 17M d'angles de site ainsi qu'une ligne verticale 161M dont les images 17A et 161A sont respectivement une échelle d'angles de site et un index pour lire précisément l'angle d'azimut.

Le capteur comporte, ici, un compas magnétique pendulaire comprenant une sphère mobile 671 renfermant, de façon excentrée, un barreau aimanté, non représenté. La sphère 671 peut tourner en tous sens, de par le fait que, ici, elle flotte dans un liquide emprisonné dans une bulle sphérique 675 en matériau transparent, solidaire de la caméra 2-3 par un pied 678, constituant l'enveloppe externe du compas et de diamètre interne légèrement supérieur au diamètre de la sphère 671. La sphère 671 ayant, par le poids du barreau aimanté, son centre de gravité déporté en-dessous de son centre de poussée, est en équilibre pendulaire stable, son pôle "nord" étant toujours à la verticale au-dessus de son centre, tandis que l'aimantation fait pivoter, si nécessaire, la sphère 671 autour d'un axe vertical pour toujours pointer vers le nord terrestre magnétique un même point de la ceinture équatoriale de la sphère 671. La ceinture équatoriale comporte des indications d'azimut magnétique 672 sous forme de graduations le long d'une ligne équatoriale 171 et de chiffres allant de 0 à 360 degrés.

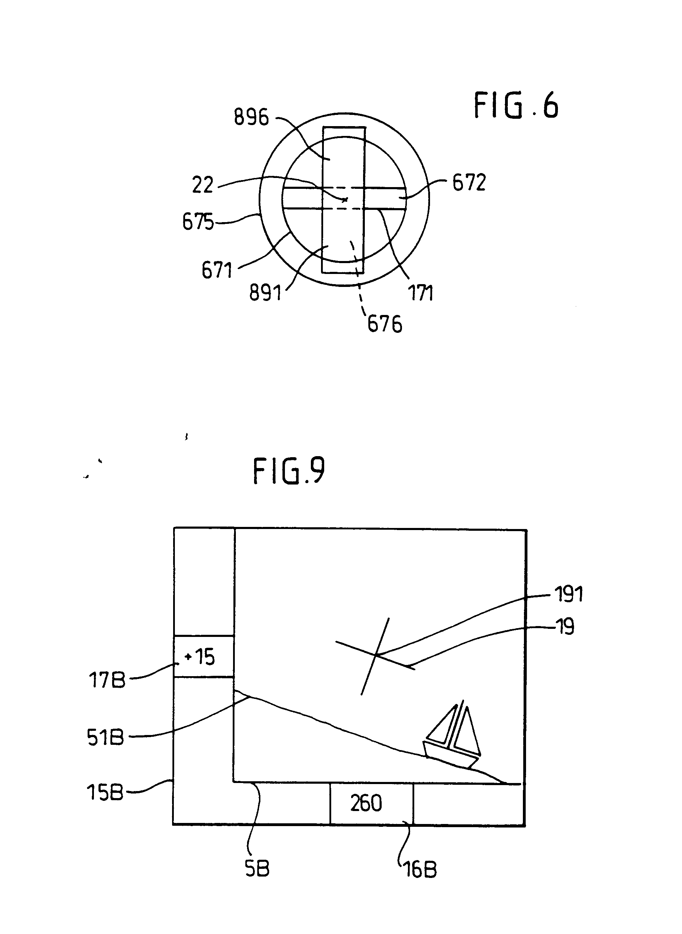

L'image, limitée par un cache non représenté, d'une bande verticale 676 de la sphère 671, (aussi représentée sur la figure 6), est transmise par une lentille 89Asous forme du faisceau 1011A, d'axe optique 22, atteignant la lame semi-transparente 14A. Une lame semi-transparente 679 interposée à 45 degrés en amont de la lentille 89A, transmet à celle-ci l'image de la bande verticale 676 ainsi que la lumière d'éclairage issue d'une ampoule électrique 890. Comme le montre l'image composite restituée 15, l'image 160A de la bande verticale 676 de la sphère 671 est juxtaposée à l'image 5 de la scène. Dans cet exemple, l'angle d'azimut de la ligne de visée 18 est de 260 degrés et cette indication apparaît dans l'image 160, sous forme de l'image 16A des indications d'azimut 672, qui est associée à l'image 1711 de la ligne équatoriale 171.

Si la caméra 2,3 tourne selon un axe vertical autour de la sphère 671, d'orientation fixe, ce sera une autre bande verticale, donc une autre indication d'azimut, qui apparaîtra dans l'image 16A.

Dans le cas où, comme dans cet exemple, l'angle de site de la ligne de visée 18 est de +15 degrés, la ceinture équatoriale 672 sur la sphère 671 occupe en réalité la position 673 représentée par une ligne en pointillés et correspondant à l'horizontale sur la figure 2. De ce fait, l'axe optique 22 de la lentille 89Aa aussi un angle de site de +15 degrés et atteint, en montant selon cet angle de site, la bande verticale 676 de la sphère 671, en-dessous de la ceinture équatoriale 673 dont l'image 16Ase trouve ainsi déportée vers les angles de site positifs dans l'image 160Ade la bande verticale 676. La valeur lue sur l'échelle de site 17A en regard de l'image 16Ade l'indication d'azimut, plus précisément ici en regard de l'image 1711 de la ligne équatoriale 171, correspond à l'angle de site cherché.

L'échelle de site 17A pourrait aussi être fournie par l'image de graduations portées sur une bande verticale 677 de la bulle 675, fixe par rapport à la lentille 89A, qui est en regard de la bande verticale 676 de la sphère mobile 671, les images des deux bandes verticales 676 et 677 se superposant.

La lame 43A comporte, ici, la mire fournissant l'image 19.

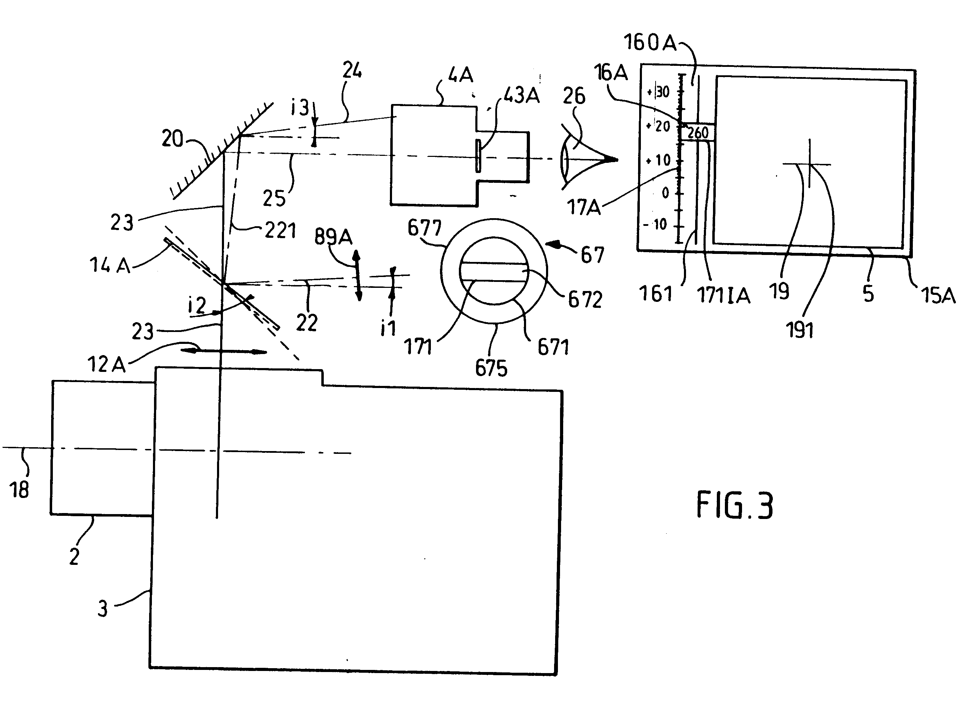

S'il s'agit d'effectuer une surveillance du ciel, l'échelle de site 17A peut être décalée pour ne comporter que les angles positifs. Comme cela apparaît sur la figure 3, cela peut être réalisé en faisant tourner d'un angle i1 l'axe 22 du faisceau 1011A issu de la lentille 89A et en déplaçant celle-ci et le compas 67 de façon appropriée, pour que le faisceau 1011A atteigne la lame 14Asous un angle différent de 45 degrés.

En plus ou à la place de la rotation de l'axe optique 22, on peut incliner, sur l'axe optique 23, la lame 14A d'un angle i2 different de 45 degrés.

Le faisceau issu de la lentille 89A est alors réfléchi sur la lame 14A selon un axe optique 221 distinct de l'axe 23, puis est réfléchi sur le miroir 20, en un point hors de l'axe 23, selon un angle i3, fonction des angles i1 et i2, par rapport à l'axe optique 25. L'image 16A, donnant l'azimut, est alors décalée, dans cet exemple, vers les angles de site positifs. L'échelle de site sur la lame 43Aest modifiée de façon correspondante, et, ici, dilatée, ainsi que l'image 5, pour accroître la précision de lecture.

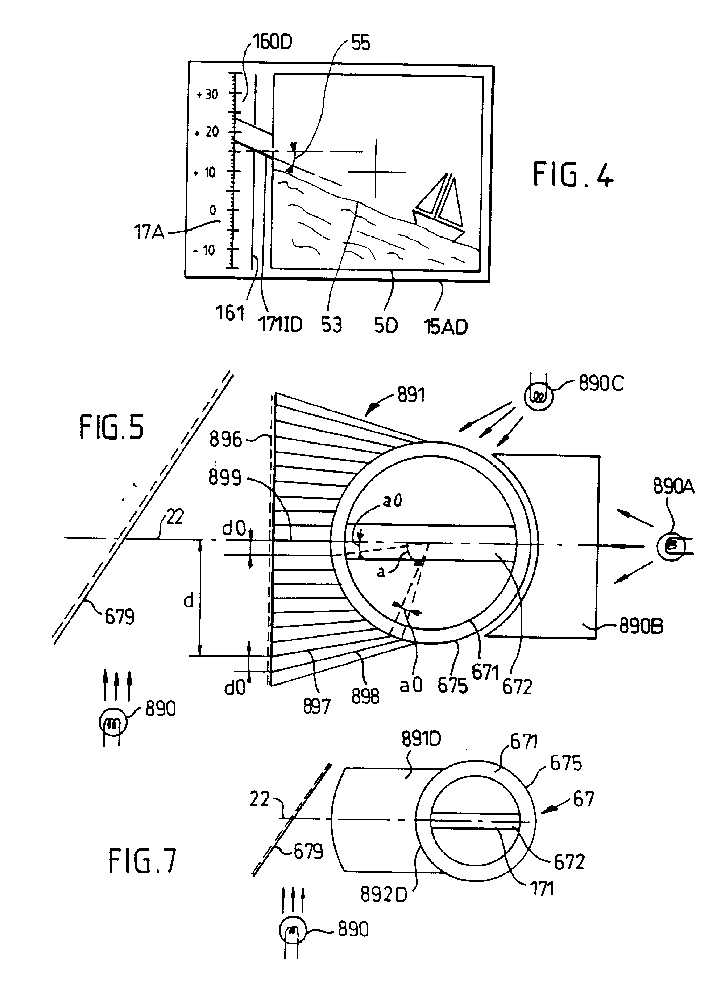

La figure 4 illustre le cas où l'orientation de la caméra 2,3 présente un angle de dévers, c'est-à-dire que la caméra 2,3 est inclinée latéralement.

L'image composite 15AD comporte alors une image 5D de la scène, en dévers tout comme une image 160D de la bande "verticale" 676, l'échelle de site 17A, issue de la mire de la lame 43, conservant son orientation. La ligne d'horizon 53 présente un angle de dévers qui est défini par l'angle 55 formé par une perpendiculaire à l'index vertical d'azimut 161 et l'image 1711D de la ligne équatoriale 171, parallèle à la ligne d'horizon 53.

La lecture de l'angle de site se fait par projection orthogonale, sur l'échelle de site 17A, du point d'intersection entre l'image 1711D de la ligne équatoriale et l'index d'azimut 161.

La visualisation analogique de l'angle de dévers permet à l'opérateur d'apprécier, de façon ergonomique, le dévers et de l'annuler sans devoir détourner son attention visuelle ou intellectuelle.

Cette correction du dévers peut s'effectuer d'après uniquement les images fournies par le capteur 67, sans utiliser la ligne d'horizon 53.

Par ailleurs (figure 2), comme l'indication visible d'azimut 672 portée par la sphère 671 se déplace, relativement à la lentille 89A, verticalement selon un cercle lorsque l'angle de site varie, il faut maintenir cette indication d'azimut 672 sensiblement dans la surface focale de la lentille 89A et il est souhaitable que l'image correspondante 6721 se déplace linéaire- ment en fonction de l'angle de site, de façon à conserver constante la précision de la lecture. Or, le déplacement vertical de l'image 16A de l'indication d'azimut 672 suit une loi sinusoïdale.

Ces deux difficultés sont surmontées en disposant, comme le montre la figure 5, entre la lentille 89A et la bulle 675, un faisceau 891 de fibres optiques dont les extrémités sont, d'un côté, sur la bulle 675 et tournées vers son centre et, de l'autre côté, dans la surface focale 896 de la lentille 89A. Une fibre 897 dont une extrémité est située, au niveau de la surface focale 896, à une distance d de l'axe 22 est, à son extrémité sur la bulle 675, écartée angulairement d'un angle a proportionnel à la distance d. On comprendra que la fonction des fibres est indépendante de la forme du faisceau qu'elles constituent, et qui peut, par exemple, être un faisceau de fibres parallèles.

Le déplacement vertical de l'image 16 de l'indication d'azimut est ainsi linéarisé, comme l'illustrent les fibres 898 et 899, respectivement distantes d'une même distance radiale d0, dans la surface focale 896, de la fibre 897 et de l'axe 22, tout en ayant une même distance angulaire a0 avec la fibre 897 et l'axe 22 au niveau de la bulle 675. L'ampoule 890 éclaire, comme précédemment, la lame semi-transparente 679.

Il est aussi représenté, sur l'axe 22, une ampoule 890A qui éclaire, par transparence, vers la lame 679, la sphère 671 à travers un barreau 890B guide de lumière, épousant la forme de la sphère 675. De même, il peut être prévu une ampoule 890C hors de l'axe 22, éclairant la sphère 671, ici de haut en bas dans l'exemple de la figure, la ceinture équatoriale portant une peinture phosphorescente.

La figure 6 montre, depuis la lentille 89Aet selon son axe 22, la section transversale du faisceau de fibres 891, de taille définissant celle de la bande verticale 676, ainsi que la sphère 671 et la bulle 675.

La figure 7 illustre, par rapport à la figure 5, une variante de réalisation dans laquelle la lentille 89A et le faisceau de fibres 891 ont été remplacés par un objectif 891 D en contact, par une face 892D, avec la bulle 675. La face 892D correspond à la surface focale de l'objectif 891 D, si bien que le problème de profondeur de champ lors du déplacement vertical des indications d'azimut 672 est résolu. L'objectif 891 D peut être composé de plusieurs lentilles.

Un second exemple de réalisation du dispositif de prise de vues de l'invention est représenté sur la figure 8, où le signal d'image composite 15CB est électronique et commande le moniteur d'un écran de télévision 4B.

La structure générale correspond à celle de la figure 1.

Hormis le moniteur et l'écran de télévision 4B, l'ensemble des éléments représentés est, sauf indication contraire, solidaire de, et même ici, intégré à, la caméra 2,3. Tout aussi bien, le moniteur et l'écran de télévision 4B pourraient être solidaires et même intégrés à la caméra 2,3, formant alors un ensemble compact.

La caméra 2,3 a, de son objectif 2 au bloc électronique 33, la constitution représentée sur la figure 2. Le signal de sortie 35 attaque un circuit de mise en forme vidéo 12B qui fournit le signal d'image 13B. Le dispositif de traitement 14B est un bloc de calcul qui reçoit le signal d'image 13B ainsi que le signal 1011B, somme des signaux d'azimut 10B et de site 11B, et commande le dispositif de visualisation 4B.

Les signaux d'azimut 10B et de site 118 correspondent à des mesures effectuées par des capteurs électroniques 6B et 7B. La mesure de l'angle d'azimut est, ici, effectuée par un magnétomètre, non représenté, comportant des bobinages "flux gate" mesurant directement l'orientation du champ magnétique terrestre sans nécessiter de rotation de pièce aimantée. Afin d'éviter l'influence perturbatrice des angles de site et de dévers, le magnétomètre est monté à la cardan sur des berceaux pendulaires maintenant horizontale l'assise du magnétomètre. Le magnétomètre délivre un signal électronique d'azimut 10B significatif de l'angle d'azimut de la ligne de visée 18.

Le capteur 7B d'angle de site comporte, ici, une masse pendulaire amortie par frottement visqueux dans un liquide, tout comme le compas 67, entraînant une piste potentiométrique lue par un balai fixe (non représentés), l'ensemble étant monté sur un berceau pendulaire qui neutralise le dévers. La tension électrique sur le balai est le signal de site 11 B.

Dans cet exemple, les signaux 10B, 11B d'azimut et de site sont numérisés par des convertisseurs ana- logiquenumérique 8B, 9B, alimentés par les capteurs 6B, 7B, qui les transmettent au dispositif de traitement 14B au travers d'une unité de traitement numérique 89B ayant, avec les convertisseurs 8B, 9B, la fonction des dispositifs de mise en forme 8, 9.

L'unité de traitement 89B comporte un microprocesseur et effectue un traitement du signal sur les signaux numérisés 10B, 11B afin de linéariser les indications fournies par les capteurs 6B, 7B, avant de transmettre le signal résultant 1011 B au dispositif de traitement 14B.

L'unité de traitement numérique 89B sert aussi, ici, à corriger les défauts connus des capteurs 6B, 7B, tels que décalage de zéro ou non linéarité, dus, par exemple, à des défauts mécaniques ou électriques ou à des masses magnétiques parasites, et à compenser la déclinaison magnétique si cela est souhaité.

Les valeurs numériques d'angle d'azimut et de site sont transcrites sous forme alphanumérique par l'unité de traitement 89B pour fournir le signal 1011 B au dispositif de traitement 14B.

Le signal 1011 B est alors incrusté, par le dispositif de traitement 14B, dans le signal vidéo fournissant l'image 5B de la scène observée, et fourni, ici selon un standard CCIR, au moniteur video 4B.

L'unité de traitement 89B fournit aussi, dans le signal 1011B, un signal 19MB commandant la restitution de l'image de mire 191 (figure 9). On comprendra que les convertisseurs 8B, 9B, l'unité de traitement 89B et le dispositif de traitement 14B peuvent être réalisés sous forme intégrée sur une même carte ou dans un même circuit.

L'indication d'angle de site, ici +15 degrés, est affichée dans une fenêtre 17B à gauche de l'image 5B de la scène, tandis que l'indication d'angle d'azimut 16B, ici 260 degrés, est affichée en dessous de l'image 5B.

Tout autre présentation, analogique ou numérique, des indications d'angle est également possible puisqu'il s'agit d'images de synthèse.

Afin de faciliter la précision de lecture, il est prévu un bouton de commande, non représenté, pour figer l'affichage des angles d'azimut et de site, qui redevient libre au relâchement du bouton.

Un capteur de dévers 27, semblable au capteur de site 7B et disposé orthogonalement à celui-ci, est, ici, prévu et raccordé à l'unité de traitement 89B pour transmettre l'indication de l'angle de dévers de la caméra 2-3 à l'écran 4B.

Sur la figure 9, l'image 19 de la mire est, par action de l'unité de traitement 89B, inclinée selon l'angle de dévers, ce qui fournit très clairement l'indication correspondante.

Le dispositif de visualisation 4 pourrait aussi comporter :
- soit un oculaire permettant d'observer des diodes électroluminescentes de visualisation, le tout solidaire de la caméra
- soit un tube cathodique fournissant une image, avec :
   . soit un oculaire pour observer un minitube solidaire de la caméra,
   . soit un écran de faibles dimensions, directement visible, solidaire de la caméra,
   . soit un écran, grand ou petit, déporté, comme ici, au gré de l'utilisateur.

Toute autre présentation, analogique ou numérique, des indications d'angle de dévers est également possible.

## Revendications

1. Caméra thermique (2,3), à ligne de visée (18) orientable contrôlée de manière aléatoire, fournissant un signal d'image (13) et comportant des moyens de traitement (14) du signal d'une image de la caméra (2,3) fournissant un signal exploitable (15C) à des moyens d'exploitation (26), des moyens (6,7 67) de détermination en angle de site et en angle d'azimut de l'orientation de la ligne de visée (18) fournissant un signal d'orientation (10,11 1011A) aux moyens de traitement (14) afin d'associer l'orientation de la ligne de visée (18) au signal exploitable (15C), caméra caractérisée par le fait que les moyens de traitement (14) sont agencés pour créer une fenêtre (16) contenant l'un des deux angles de site et d'azimut et mobile en fonction de l'autre des deux angles le long d'un repère (17).

2. Caméra selon la revendication 1, dans laquelle il est prévu des moyens (27) de détermination du dévers de la caméra (2,3).

3. Caméra selon l'une des revendications 1 et 2, dans laquelle les moyens (6,7) de détermination de l'orientation de la ligne de visée (18) comportent un moyen détecteur (67, 89A) agencé pour fournir une indication (1011A) concernant la position angulaire relative entre un support (675) suivant les déplacements angulaires de la ligne de visée (18) et un repère (672) sur un corps mobile (671) porté, libre en rotation, par ledit support (675) et agencé pour être orienté selon une direction de référence.

4. Caméra selon l'une des revendications 1 à 3, dans laquelle les moyens de traitement (14) sont des moyens optiques (14A).

5. Caméra selon la revendication 4, dans laquelle un déflecteur optique (31) est agencé pour transmettre auxdits moyens de traitement (14A) un faisceau lumineux (342) issu d'une barrette de diodes électroluminescentes (341) fournissant le signal d'image (13A).

6. Caméra selon l'une des revendications 3 à 5, dans laquelle ledit corps mobile (671) est une sphère flottant dans une autre sphère (675) appartenant audit support.

7. Caméra selon l'une des revendications 4 à 6, dans laquelle ledit moyen détecteur (67, 89A) comporte une optique collimatrice (89A, 891 D) agencée pour recevoir l'image (676) dudit corps mobile (671) au travers d'un faisceau de fibres optiques (891) dont les extrémités sont respectivement disposées dans la surface focale (892D) de ladite optique (89, 891 D) et, de façon régulière, selon la surface d'une sphère (675) entourant ledit corps (671).

8. Caméra selon la revendication 7, dans laquelle ladite optique collimatrice (89, 891 D) comporte une lentille (891 D) dont une face épouse sensiblement la forme dudit corps (671).

9. Caméra selon l'une des revendications 1 à 8, dans laquelle lesdits moyens de traitement (14) du signal d'image comportent un bloc de traitement de signal (89B) agencé pour corriger les signaux (10B, 11 B) issus des moyens (6, 7) de détermination de l'orientation de la ligne de visée (18).
